# EUROPEAN PATENT SPECIFICATION

(11) **EP 2 810 425 B1**
(45) Date of publication and mention of the grant of the patent: **27.01.2016**
(21) Application number: 13704521.7
(22) Date of filing: 30.01.2013
(51) Int. Cl.: H04B 5/00, H04W 4/00, H04M 1/725, G06K 7/10

(54) **METHODS AND APPARATUS FOR IMPROVING RESOLUTION AMONG DEVICES WITH DIFFERENT SIZE NFC IDENTIFIERS**
VERFAHREN UND VORRICHTUNG ZUR ERHÖHUNG DER AUFLÖSUNG ZWISCHEN VORRICHTUNGEN MIT NFC-IDENTIFIKATOREN VON UNTERSCHIEDLICHER GRÖSSE
PROCÉDÉS ET APPAREIL DESTINÉS À AMÉLIORER LA RÉSOLUTION ENTRE DES DISPOSITIFS AYANT DES IDENTIFICATEURS NFC DE TAILLES DIFFÉRENTES

(30) Priority: 02.02.2012 US 201261594268 P; 16.01.2013 US 201313742728
(43) Date of publication of application: 10.12.2014
(73) Proprietor: Qualcomm Incorporated, San Diego, CA 92121 (US)
(72) Inventor: HILLAN, John, San Diego, California 92121 (US); CHINGALANDE, Dubai, San Diego, California 92121 (US)
(74) Representative: Wegner, Hans
(86) International application number: PCT/US2013/023905
(87) International publication number: WO 2013/116372

(56) References cited:
- KR-A- 20080 047 854
- "NFC Activity Specification 1.0", , 18 November 2010 (2010-11-18), XP055059248, Retrieved from the Internet: URL:http://www.nfc-forum.org/specs/spec_li cense/document_form/custom_layout?13654233 37032 [retrieved on 2013-04-11] cited in the application
- John Hillan: "Correction to NFC-A Collision Resolution Activity", , 3 February 2012 (2012-02-03), XP055059795, Retrieved from the Internet: URL:http://www.nfc-forum.org/apps/group_pu blic/download.php/11097/Qualcomm%20Input%2 0Paper%20on%20NFC-A%20Collision%20Resoluti on.docx [retrieved on 2013-04-16]

## Description

### BACKGROUND

The disclosed aspects relate generally to communications between and/or within devices and specifically to methods and systems for improving resolution among various device operable to use a NFC type-A radio frequency (RF) technology and identified using double or triple size near field communication (NFC) identifiers (NFCIDs).

Advances in technology have resulted in smaller and more powerful personal computing devices. For example, there currently exist a variety of portable personal computing devices, including wireless computing devices, such as portable wireless telephones, personal digital assistants (PDAs) and paging devices that are each small, lightweight, and can be easily carried by users. More specifically, the portable wireless telephones, for example, further include cellular telephones that communicate voice and data packets over wireless networks. Many such cellular telephones are being manufactured with relatively large increases in computing capabilities, and as such, are becoming tantamount to small personal computers and hand-held PDAs. Further, such devices are being manufactured to enable communications using a variety of frequencies and applicable coverage areas, such as cellular communications, wireless local area network (WLAN) communications, near field communication (NFC), etc.

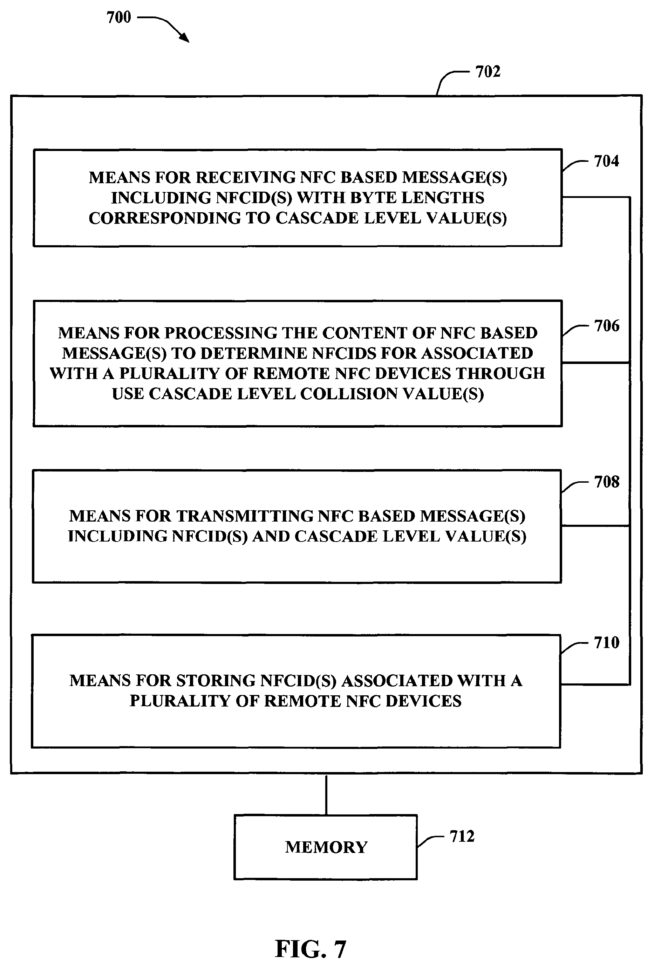

The NFC Forum Activity specification defines a collision resolution procedure to use when resolving multiple devices, tags, and cards that use NFC Type A (NFC-A) radio frequency (RF) technology. The NFC Forum ACTIVITY specification, version 1, section 9.3.4, Figure 7, Requirement 25 defines how a polling device can detect and resolve multiple NFC-A devices within its operating volume. Each NFC-A device may include a NFCID (also referred to as NFCID1) that may be 4, 7, or 10 bytes long (e.g., single, double, and triple size NFCID1). Resolution of double and triple size NFCID1 devices involves the use of a loop involving a cascade level parameter. The cascade level parameter is intended to assure that the polling device can successfully resolve a number of NFC-A devices regardless of the NFCID1 lengths. However, as currently implemented, the procedure may finish with one or more devices still unresolved while providing no indication that the unresolved devices are present. This deficiency arises because only a single bit is used to track whether a collision is still pending. If a collision is detected at a given cascade level, and if as part of resolving that collision, the procedure increases the cascade level to resolve a double or triple size NFCID, then once the double or triple sized NFCID is resolved, the current NFC Forum specification clears the collision pending bit. As such, when the procedure returns to the earlier cascade level, the device is prompted to exit collision resolution because the collision pending bit was cleared. In other words, once a double or triple size NFCID has been resolved, the information that a collision occurred at a different cascade level has been lost. Thus at least one device is left unresolved and the procedure terminates with the status bit incorrectly indicating that the procedure terminated with no collision pending.

Thus, improved apparatus and methods for improving NFC-A device collision resolution in an environment with different NFCID sizes may be desired.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with improving NFC-A device collision resolution in an environment with different NFCID sizes. In one example, a communications device is equipped determine a colliding bit in a first NFCID that has a byte length corresponding to a first cascade level value, set a cascade level collision value based on the first cascade level value, generate a second NFCID by selecting a value for the colliding bit, determine that a byte length associated with the second NFCID results in an incomplete NFCID for a first remote NFC device, obtain a further part of the second NFCID using a second cascade level value that corresponds to a longer byte length NFCID than the first cascade level value, determine that at least one other remote NFC device is not yet identified based on the set cascade level collision value, and obtain a third NFCID that corresponds to a second remote NFC device.

According to related aspects, a method for improving NFC-A device collision resolution in an environment with different NFCID sizes is provided. The method may include determining a colliding bit in a first NFCID that has a byte length corresponding to a first cascade level value. Further, the method may include setting a cascade level collision value based on the first cascade level value. Further, the method may include generating a second NFCID from the first NFCID by selecting one value of two possible values for the colliding bit. Further, the method may include determining that a byte length associated with the second NFCID results in an incomplete NFCID for a first remote NFC device. Further, the method may include obtaining a further part of the second NFCID that corresponds to the first remote NFC device using a second cascade level value. In an aspect, the second cascade level value may correspond to a longer byte length NFCID than the first cascade level value. Further, the method can include determining that at least one other remote NFC device is not yet identified based on the set cascade level collision value. Moreover, the method can include obtaining a third NFCID that corresponds to a second remote NFC device.

Another aspect relates to a communications apparatus for improving NFC-A device collision resolution in an environment with different NFCID sizes. The wireless communications apparatus can include means for receiving one or more NFC based messages including one or more NFCIDs and based on one or more cascade level values. Moreover, the communications apparatus can include means for processing the received one or more NFC based messages. In an aspect, the means for processing may be configured to: determine a colliding bit in a first NFCID of the one or more NFCIDs based on a first cascade level value of the one or more cascade level values, set a cascade level collision value based on the first cascade level value, generate a second NFCID from the first NFCID by selecting one value of two possible values for the colliding bit, determine that a byte length associated with the second NFCID results in an incomplete NFCID for a first remote NFC device, obtain a further part of the second NFCID that corresponds to the first remote NFC device using a second cascade level value, determine that at least one other remote NFC device is not yet identified based on the set cascade level collision value, and obtain a third NFCID that corresponds to a second remote NFC device. In an aspect, the second cascade level value may correspond to a longer byte length NFCID than the first cascade level value.

Another aspect relates to an apparatus for NFC communications. The apparatus can include a NFC collision resolution module coupled to at least one of a memory or a processor. The NFC collision resolution module may be configured to determining a colliding bit in a first NFCID that has a byte length corresponding to a first cascade level value. Further, the NFC collision resolution module may be configured to set a cascade level collision value based on the first cascade level value. Further, the NFC collision resolution module may be configured to generate a second NFCID from the first NFCID by selecting one value of two possible values for the colliding bit. Further, the NFC collision resolution module may be configured to determine that a byte length associated with the second NFCID results in an incomplete NFCID for a first remote NFC device. Further, the NFC collision resolution module may be configured to obtain a further part of the second NFCID that corresponds to the first remote NFC device using a second cascade level value. In an aspect, the second cascade level value may correspond to a longer byte length NFCID than the first cascade level value. Further, the NFC collision resolution module may be configured to determine that at least one other remote NFC device is not yet identified based on the set cascade level collision value. Moreover, the NFC collision resolution module may be configured to obtain a third NFCID that corresponds to a second remote NFC device.

Another aspect relates to a computer program product, which can have a computer-readable medium comprising code for determining a colliding bit in a first NFCID that has a byte length corresponding to a first cascade level value. Further, the computer-readable medium can include code for setting a cascade level collision value based on the first cascade level value. Further, the computer-readable medium can include code for generating a second NFCID from the first NFCID by selecting one value of two possible values for the colliding bit. Further, the computer-readable medium can include code for determining that a byte length associated with the second NFCID results in an incomplete NFCID for a first remote NFC device. Further, the computer-readable medium can include code for obtaining a further part of the second NFCID that corresponds to the first remote NFC device using a second cascade level value. In an aspect, the second cascade level value may correspond to a longer byte length NFCID than the first cascade level value. Further, the computer-readable medium can include code for determining that at least one other remote NFC device is not yet identified based on the set cascade level collision value. Moreover, the computer-readable medium can include code for obtaining a third NFCID that corresponds to a second remote NFC device.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram of a wireless communication system, according to an aspect;
FIG. 2 is a schematic diagram of a wireless communication system, according to an aspect;
FIG. 3 is a block diagram of a NFC environment, according to an aspect;
FIG. 4 is a flowchart describing an example of improving collision resolution among multiple NFC-A devices, according to an aspect;
FIG. 5 is a call flow describing an example system for improving collision resolution among multiple NFC-A devices, according to an aspect;
FIG. 6 illustrates a block diagram example architecture of a communications device, according to an aspect;
FIG. 7 is a functional block diagram of an example communication system for improving collision resolution among multiple NFC-A devices, according to an aspect.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Generally, an improved procedure for collision resolution is described herein by introducing a mechanism (e.g., a cascade level collision parameter) for tracking collisions at each cascade level. When a collision occurs at a given cascade level, the accompanying cascade level collision value within the cascade level collision parameter may be set. As such, even when the collision resolution procedure increases the cascade level to resolve double or triple size NFCIDs, the original cascade level flag may still be set, so collision resolution may continue. When there are no collisions left unresolved at any cascade level the procedure may successfully end with an indication that there are no remaining unresolved devices. When such an indication is received, the cascade level collision parameter may be reset to a default setting (e.g., "000").

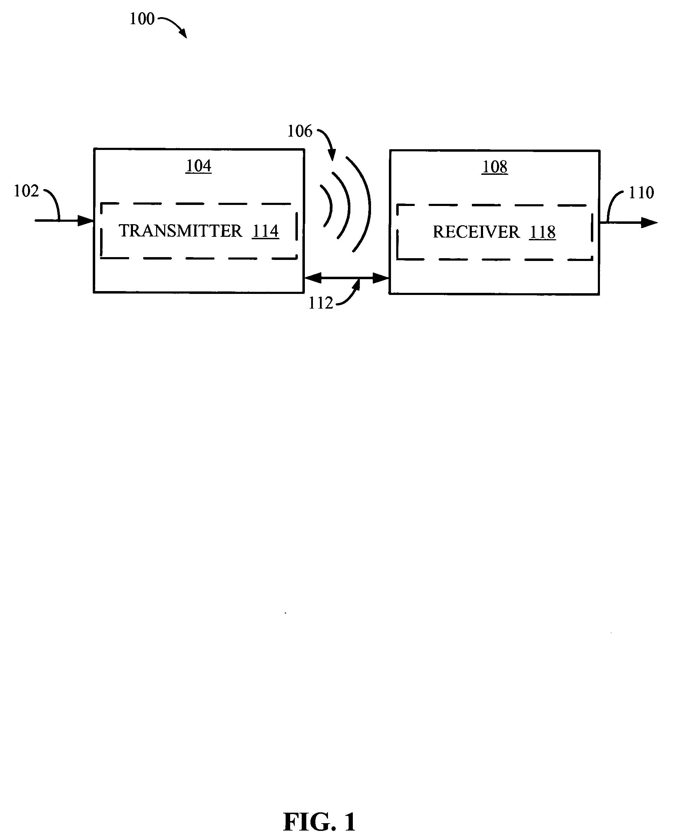

**FIG. 1** illustrates a wireless communication system 100, in accordance with various exemplary embodiments of the present invention. Input power 102 is provided to a transmitter 104 for generating a radiated field 106 for providing energy transfer. A receiver 108 couples to the radiated field 106 and generates an output power 110 for storing or consumption by a device (not shown) coupled to the output power 110. Both the transmitter 104 and the receiver 108 are separated by a distance 112. In an exemplary embodiment, transmitter 104 and receiver 108 are configured according to a mutual resonant relationship and when the resonant frequency of receiver 108 and the resonant frequency of transmitter 104 are very close, transmission losses between the transmitter 104 and the receiver 108 are minimal when the receiver 108 is located in the "near-field" of the radiated field 106.

Transmitter 104 further includes a transmit antenna 114 for providing a means for energy transmission. A receiver 108 includes a receive antenna 118 as a means for energy reception. The transmit and receive antennas are sized according to applications and devices associated therewith. As stated, an efficient energy transfer occurs by coupling a large portion of the energy in the near-field of the transmitting antenna to a receiving antenna rather than propagating most of the energy in an electromagnetic wave to the far field. When in this near-field a coupling mode may be developed between the transmit antenna 114 and the receive antenna 118. The area around the antennas 114 and 118 where this near-field coupling may occur is referred to herein as a coupling-mode region.

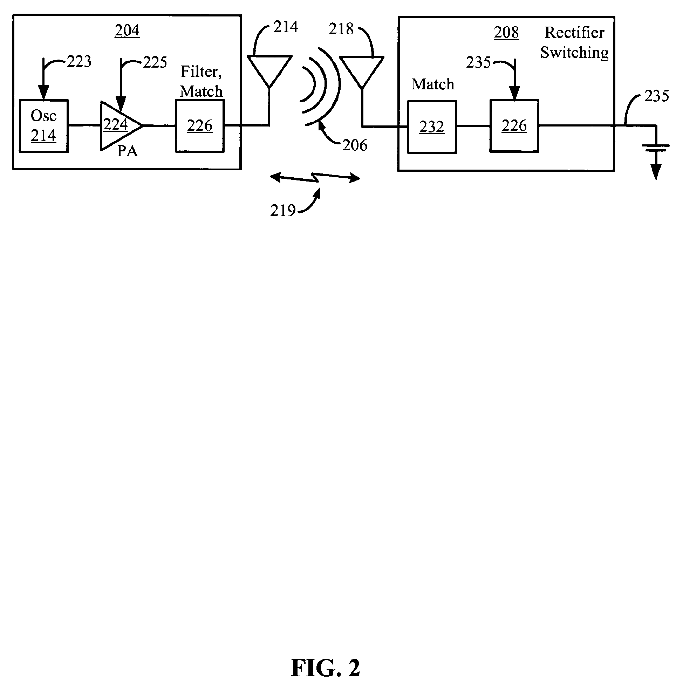

**FIG. 2** is a schematic diagram of an example near field wireless communication system. The transmitter 204 includes an oscillator 222, a power amplifier 224 and a filter and matching circuit 226. The oscillator is configured to generate a signal at a desired frequency, which may be adjusted in response message to adjustment signal 223. The oscillator signal may be amplified by the power amplifier 224 with an amplification amount responsive to control signal 225. The filter and matching circuit 226 may be included to filter out harmonics or other unwanted frequencies and match the impedance of the transmitter 204 to the transmit antenna 214.

The receiver 208 may include a matching circuit 232 and a rectifier and switching circuit 234 to generate a DC power output to charge a battery 236 as shown in FIG. 2 or power a device coupled to the receiver (not shown). The matching circuit 232 may be included to match the impedance of the receiver 208 to the receive antenna 218. The receiver 208 and transmitter 204 may communicate on a separate communication channel 219 (e.g., Bluetooth, Zigbee, cellular, etc.).

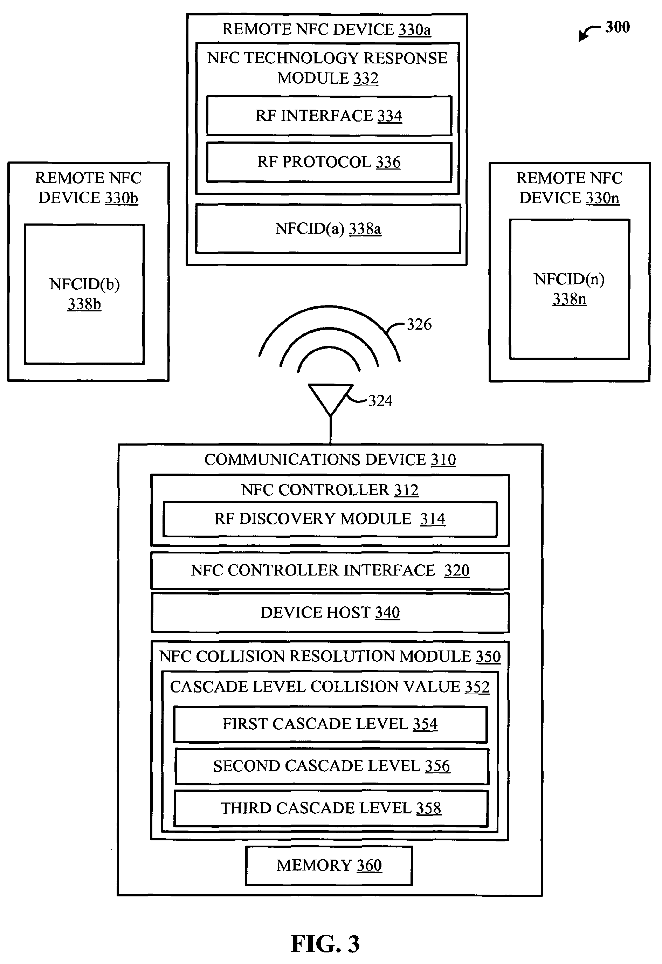

With reference to **FIG. 3****,** a block diagram of a communication network 300 according to an aspect is illustrated. Communication network 300 may include communications devices 310 which, through antenna 324, may be within an operating volume of two or more remote NFC devices (330a, 330b, 330n). Each NFC device (310, 330a, 330b, 330n) in the communication network 300 may use one or more NFC RF technologies 326 (e.g., NFC-A, NFC-B, NFC-F, etc.). In an aspect, communications device 310 may use NFC collision resolution module 350 to attempt to detect the presence of and identify each of the remote NFC devices (330a, 330b, 330n). Each remote NFC device (330a, 330b, 330n) may be identified using an NFCID (NFCID(a), NFCID(b), NFCID(n)) (338a, 338b, 338n). In an aspect, each NFCID (338a, 338b, 338n) may include a 4 byte identifier, a 7 byte identifier, or a 10 byte identifier. As used herein, the 4, 7, and 10 byte identifiers may be referred to as single size, double size, and triple size identifiers, respectfully. Further, each remote NFC device (330a, 330b, 330n) may be operable to communicate with communications device 310 using NFC technology response module 332 through one or more RF interfaces 334 using one or more RF protocols 336. In an aspect, each of the remote NFC devices is operable to use a NFC-A RF technology when transmitting their respective NFCIDs (338a, 338b, 338n). In another aspect, communications device 310 may be operable to be connected to an access network and/or core network (e.g., a CDMA network, a GPRS network, a UMTS network, and other types of wireline and wireless communication networks). In an aspect, remote NFC devices (330a, 330b, 330n) may include but are not limited to a remote NFC tag, a reader/writer device, a peer initiator device, a remote peer target device, etc.

Communications device 310 may include NCI 320. In an aspect, NCI 320 may be operable to enable communications between a DH 340 and NFC controller 312.

Communications device 310 may include a NFC controller (NFCC) 312. In an aspect, NFCC 312 may include RF discovery module 314. RF discovery module 314 may be operable to perform RF discovery using a discovery process. One aspect of the discovery process may include polling for the presence of, and resolving collisions between, one or more remote NFC devices (330a, 330b, 330n) operable to communicate using a NFC-A RF technology. DH 340 may be operable to generate a command to prompt NFCC 312 to perform various functions associated with RF discovery.

Communications device 310 may include NFC collision resolution module 350. NFC collision resolution module 350 may be operable to assist with detection and identification of remote NFC devices (330a, 330b, 330n) within an operating volume. In an aspect, to assist with device detection/identification in a communication network 300 in which one or more of the remote NFC devices (330a, 330b, 330n) use double or triple size NFCIDs (338a, 338b, 338n) a cascade level collision value 352 may be used. In such an aspect, cascade level collision value 352 may include an available value to indicate a collision at each of the different size NFCIDs. In other words, cascade level collision value 352 may include a value to indicate a first cascade level 354, a second cascade level 356, and a third cascade level 358. In an aspect, cascade level collision value 352 may be able to indicate any combination of collisions among devices identified by any one of single, double, triple size NFCIDs. Although FIG. 3 depicts NFC collision resolution module 350 is a separate module, one of ordinary skill in the art would appreciate that the functionality associated with NFC collision resolution module 350 may be included within one or more components, such as but not limited to, NFCC 312, DH 340, etc.

Communications device 310 may include further include memory 360 that may be operable to store one or more of resolved/detected remote NFCIDs. In an aspect, NFC collision resolution module 350 may be operable to resolve NFCIDs for one or more of the remote NFC devices (330a, 330b, 330n) and store each of these NFCIDs in memory 360.

In one operational aspect, NFC collision resolution module 350 may detect a collision at a first cascade level. In an aspect, the first cascade level may be associated with a 4 byte length NFCID. In another aspect, the first cascade level may be associated with a 7 byte length NFCID. In response to NFC collision resolution module 350 detecting a collision at the first cascade level, cascade level collision value 352 may set a first cascade level value 354. Thereafter, NFC collision resolution module 350 may identify one of the remote NFC devices. In an aspect, where the identified remote NFC device includes a NFCID that is associated with a cascade level greater than the first cascade level , the set value in cascade level collision value 352 may prompt collision resolution module 350 to continue collision resolution to detect additional remote NFC devices that may be present in the communications device 310 operating volume. Upon identification of each of the remote NFC devices at each of the cascade levels for which a cascade level collision value 352 has been set, then the process may successfully terminate and the cascade level collision value 352 may be reset (e.g., "000).

Therefore, a system and method is disclosed to provide improved collision resolution for a polling communications device 310 and multiple remote NFC devices (330a, 330b, 330n).

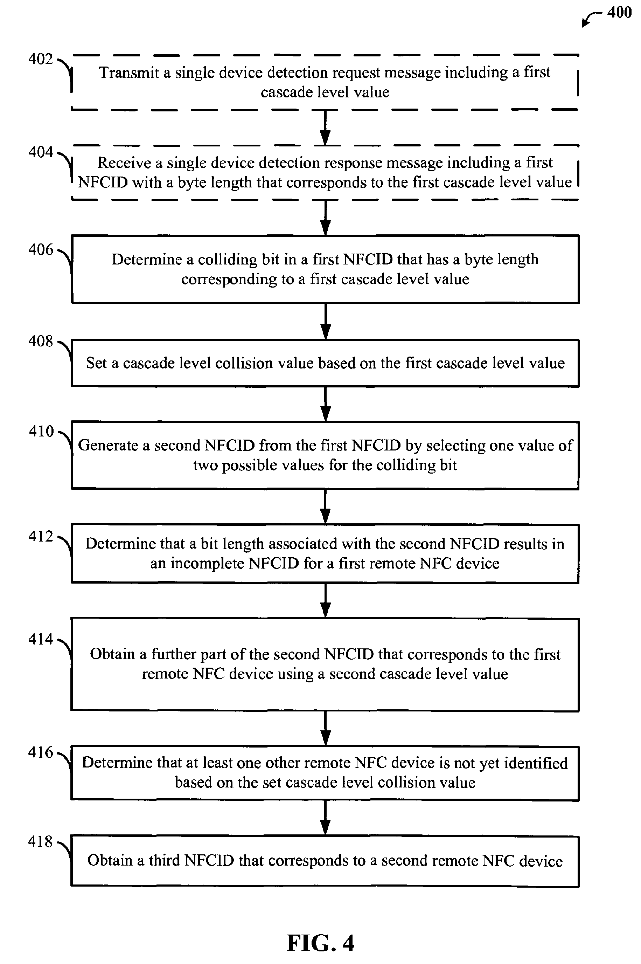

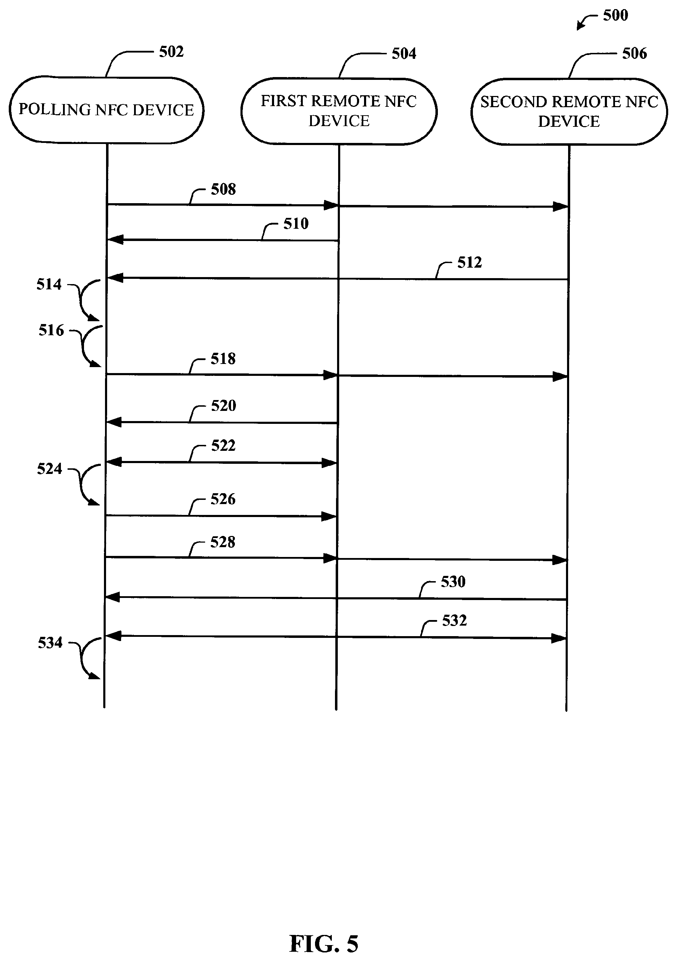

FIGs. 4 and 5 illustrate various methodologies in accordance with various aspects of the presented subject matter. While, for purposes of simplicity of explanation, the methodologies are shown and described as a series of acts or sequence steps, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

**FIG. 4** depicts an example flowchart describing a process 400 for improving NFC collision resolution in a communications environment in which multiple remote NFC devices may be identified with various size NFCIDs.

In an optional aspect, at block 402, a NFC device may transmit a single device detection request message including a first cascade level value. In such an optional aspect, at block 404, the NFC device may receive a single device detection response message including a first NFCID with a byte length that corresponds to the first cascade level value.

At block 406, a NFC device may determine a collision by receiving two possible values for a colliding byte in the NFCID based on the first cascade level value. In an aspect, the first cascade level value may correspond to a 4 byte NFCID, a 7 byte NFCID, etc. In an aspect, each of a plurality of remote NFC devices from which a response message is received may be operable to use NFC-A radio RF technology. In such an aspect, the remote NFC devices may include a reader device, a writer device, a tag, a card, and a peer device, etc, or any combination thereof.

At block 408, the NFC device may set a cascade level collision value based on the first cascade level value. In an aspect, the cascade level collision value includes three available values where each of the three available values may indicate a collision associated with a different cascade level value. In an aspect, where a collision occurs during analysis of a single sized NFCID then a value associated with the first cascade level may be set in the cascade level collision value. In another aspect, where a collision occurs during analysis of a double sized NFCID then a value associated with the second cascade level may be set in cascade level collision value. In still another aspect, where a collision occurs during analysis of a triple sized NFCID then a value associated with the third cascade level may be set in the cascade level collision value. In another aspect, where collisions occurs during analysis of multiple cascade levels then multiple values may be set in the cascade level collision value.

At block 410, the NFC device may generate a second NFCID from the first NFCID by selecting one value of two possible values for the colliding byte.

At block 412, the NFC device may determine that a byte length associated with the second NFCID results in an incomplete NFCID for a first remote NFC device. In an aspect, this determination may be based on transmission of a single device detection request message including the first cascade level value and the second NFCID, reception of a single device detection response message from the first remote NFC device identified through the second NFCID, transmission of a selecting request message to the first remote NFC device including the second NFCID and the first cascade level value, and reception of a selecting response message from the first remote NFC device indicating that the second NFCID is incomplete.

At block 414, the NFC device may obtain a third NFCID that corresponds to the first remote NFC device using a second cascade level value. In an aspect, the second cascade level value may correspond to a longer byte length NFCID than the first cascade level value. In an aspect, the third NFCID may be obtained through transmission of a single device detection request message including the second cascade level value, reception of a single device detection response message from the first NFC device including the third NFCID with a byte length that corresponds to the second cascade level value, transmission of a selecting request message to the first remote NFC device including the third NFCID and the second cascade level value, and reception of reception of a selecting response message from the first remote NFC device indicating that the second NFCID is complete. In such an aspect, the NFC device may store the third NFCID as an identifier for the first remote NFC device. In an aspect, the second cascade level value may correspond to at least one of a 7 byte NFCID and a 10 byte NFCID.

At block 416, the NFC device may determine that at least one other remote NFC device is not yet identified based on the set cascade level collision value.

At block 418, the NFC device may obtain a fourth NFCID that corresponds to a second remote NFC device. In an aspect, the fourth NFCID may be obtained by the NFC device through transmission of a sleep request message to the first remote NFC device, transmission of a single device detection request message including the first cascade level value, reception of a single device detection response message from a second remote NFC device that indicates no collisions, transmission of a selecting request message to the second remote NFC device including the fourth NFCID based on the first cascade level value, and reception of a selecting response message from the second remote NFC device indicating that the fourth NFCID is complete. In such an aspect, the NFC device may store the fourth NFCID as an identifier for the second remote NFC device. In an aspect, once all remote NFC devices have been detected then the cascade level collision value may be reset (e.g., "000"). In an aspect, the first and second remote NFC devices may be operable to use NFC-A radio frequency (RF) technology.

**FIG. 5** depicts an example call flow diagram associated with collision resolution for a polling device 502 in a NFC environment 500 that includes multiple remote NFC devices (504, 506) with different size NFCIDs.

At act 508, a polling device 502 may send a single device detection request (SDD_REQ) message including the first cascade level value (e.g., CL1). The single device detection request message may be received by a first remote NFC device 504 and a second remote NFC device 506. In the depicted example, first remote NFC device 504 may be identified using a 7 byte NFCID (e.g., double size identifier) while second remote NFC device 506 may be identified by a 4 byte NFCID (e.g., single size identifier). One of ordinary skill in the art would appreciate that these identifier sizes are picked merely for explanatory purposes and do not limit the scope of the invention. For example, the first remote NFC device 504 may be identified using a 10 byte NFCID (e.g., triple size identifier) while second remote NFC device 506 may be identified by a 4 byte NFCID (e.g., single size identifier). In another example, first remote NFC device 504 may be identified using a 10 byte NFCID (e.g., triple size identifier) while second remote NFC device 506 may be identified by a 7 byte NFCID (e.g., double size identifier).

At acts 510 and 512, first remote NFC device 504 and second remote NFC device 506 respond with single device detection response (e.g., SDD_RES) messages.

At act 514, polling device 502 determines that there is at least one collision in the received single device detection response messages. In an aspect, a collision may be detected by multiple values (e.g. "1" and "0") being received for the element in a response message.

At act, 516, polling device 502 may set a cascade level collision parameter value in response message to the detected collision at the detected cascade level. For example, the cascade level collision parameter may be set to "100" where a collision has been detected while using the first cascade level. In an aspect, the cascade level collision parameter may include as many values as there are possible NFCID sizes. In the depicted aspect, as there are three NFCID sizes (e.g., 4 byte, 7 byte, 10 byte).

At act 518, the polling device 502 may communicate with one of the remote NFC devices by setting a colliding value to either of the received values. In such an aspect, a single device detection message identifying a first remote NFC device and using a first cascade level may be transmitted. In the depicted aspect, although the first remote NFC device 504 is selected for communication, this selection process is random from the perspective of the polling device 502. In other words, the polling device merely selects a value of two colliding values rather than expressly selecting either the first or second remote NFC devices.

Because the NFCID selected by the polling device 502 corresponds to the first remote NFC device 504 and not the second remote NFC device 506, then at act 520 a single device detection response message is received only from first remote NFC device 504.

At act 522, polling device 502 and first remote NFC device 504 communicate to determine the full NFCID that identifies the first remote NFC device. In an aspect, such communications may include, the polling device 502 sending a selecting request message (e.g., SEL_REQ) to the first remote NFC device 504 including a NFCID and the first cascade level value, and the first remote NFC device 504 sending a selecting response message indicating that the NFCID that based on the first cascade level value is incomplete. Further, the polling device may then send a single device detection request message including the second cascade level value, and receive a NFCID with a byte length that corresponds to the second cascade level (e.g., (CL2). Thereafter, the polling device may again send a selecting request message to the first NFC device 504 including a NFCID and the second cascade level value, and the first remote NFC device 504 sending a selecting response message indicating that the NFCID that based on the second cascade level value is complete. Polling device 502 may then store the NFCID for the first remote NFC device 504.

At act 524, the polling device 502 may determine that there is at least one unresolved remote NFC device still within the NFC environment 500 based on the set cascade level collision parameter.

At act 526, the polling device may transmit a sleep request (e.g., SLP_REQ) message to the identified first remote NFC device 504. At act 528, a polling device 502 may send a single device detection request (SDD_REQ) message including the first cascade level value (e.g., CL1). Because first remote NFC device 504 has been prompted to sleep, at act 530 only the second remote NFC device 506 responds with a single device detection response message.

As discussed above with respect to act 522, at act 532, polling device 502 and second remote NFC device 506 communicate to determine the full NFCID that identifies the first remote NFC device. At act 534, the polling device may store the resolved NFCID associated with the second remote NFC device 506. As such, through implementing the procedure described above, both devices are resolved, and the procedure ends with the collision pending correctly indicating no collisions are pending.

As such, FIGs. 4 and 5 describe various processes by which and systems in which collision resolution may be performed in an environment in which multiple remote NFC devices may be identified using a variety of NFCIDs.

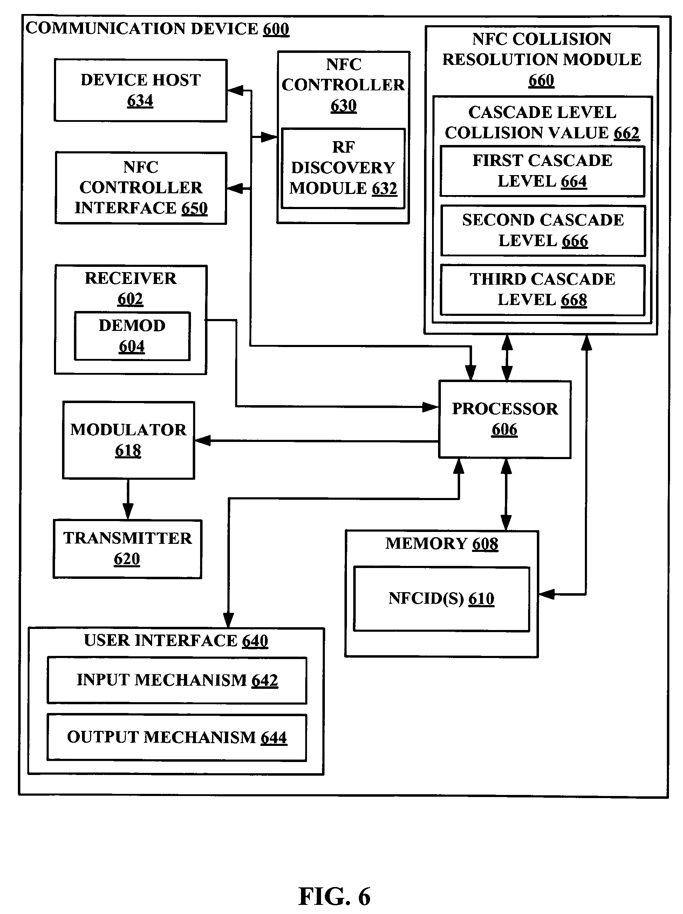

While referencing FIG. 3, but turning also now to **FIG. 6****,** an example architecture of communications device 600 is illustrated. As depicted in FIG. 6, communications device 600 comprises receiver 602 that receives a signal from, for instance, a receive antenna (not shown), performs typical actions on (e.g., filters, amplifies, downconverts, etc.) the received signal, and digitizes the conditioned signal to obtain samples. Receiver 602 can comprise a demodulator 604 that can demodulate received symbols and provide them to processor 606 for channel estimation. Processor 606 can be a processor dedicated to analyzing information received by receiver 602 and/or generating information for transmission by transmitter 620, a processor that controls one or more components of communications device 600, and/or a processor that both analyzes information received by receiver 602, generates information for transmission by transmitter 620, and controls one or more components of communications device 600. Further, signals may be prepared for transmission by transmitter 620 through modulator 618 which may modulate the signals processed by processor 606.

Communications device 600 can additionally comprise memory 608 that is operatively coupled to various components, such as but not limited processor 606 and that can store data to be transmitted, received data, information related to available channels, TCP flows, data associated with analyzed signal and/or interference strength, information related to an assigned channel, power, rate, or the like, and any other suitable information for assisting in a RF discovery process. In an aspect, memory 608 may include one or more NFCIDs 610. In an aspect, the one or more NFCIDs 610 stored on the communications device 600 may be obtained through collision resolution performed by NFC collision resolution module 660. In another aspect, NFCIDs 610 may be of different sizes (e.g., 4 byte, 7byte, 10 byte).

Further, processor 606, device host 634, NFCC 630, and/or NFC collision resolution module 660 can provide means for determining a colliding byte in a first NFCID based on a first cascade level value, means for setting a cascade level collision value based on the first cascade level value, means for generating a second NFCID from the first NFCID by selecting one value of two possible values for the colliding byte, means for determining that a byte length associated with the second NFCID results in an incomplete NFCID for a first remote NFC device, means for obtaining a further part of the second NFCID that corresponds to the first remote NFC device using a second cascade level value, means for determining that at least one other remote NFC device is not yet identified based on the set cascade level collision value, and means for obtaining a third NFCID that corresponds to a second remote NFC device. In an aspect, the second cascade level value may correspond to a longer byte length NFCID than the first cascade level value

It will be appreciated that data store (e.g., memory 608) described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable PROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Memory 608 of the subject systems and methods may comprise, without being limited to, these and any other suitable types of memory.

Communications device 600 may include a NFC controller 630 and device host 634. In an aspect, NFCC 630 may include RF discovery module 632. RF discovery module 632 may be operable to perform a discovery process and/or assist with collision resolution. One aspect of the discovery process may include polling for the presence of one or more remote NFC devices operable to communicate using a NFC-A RF technology. DH 634 may be operable to generate a command to prompt NFCC 630 to perform various functions associated with RF discovery.

In another aspect, communications device 600 may include NCI 650. In an aspect, NCI 650 may be operable to enable communications between NFC controller 630 and DH 634. NCI 650 may be operable to function in a listening mode and/or a polling mode.

In another aspect, communications device 600 may include NFC collision resolution module 660. NFC collision resolution module 660 may be operable to assist with detection and identification of remote NFC devices within an operating volume. In an aspect, to assist with device detection/identification in a wireless environment in which one or more of the remote NFC devices use double or triple size NFCIDs a cascade level collision value 662 may be used. In such an aspect, cascade level collision value 662 may include an available value to indicate a collision at each of the different size NFCIDs. In other words, cascade level collision value 662 may include a value to indicate a first cascade level 664, a second cascade level 666, and a third cascade level 668. In an aspect, cascade level collision value 662 may be able to indicate any combination of collisions among devices identified by any one of single, double, triple size NFCIDs. Although FIG. 6 depicts NFC collision resolution module 660 is a separate module, one of ordinary skill in the art would appreciate that the functionality associated with NFC collision resolution module 660 may be included within one or more components, such as but not limited to, NFCC 630, DH 634, etc. In another aspect, NFC collision resolution module 660 operable to perform NFC technology detection processes described with respect to FIGs. 4-5.

Additionally, communications device 600 may include user interface 640. User interface 640 may include input mechanisms 642 for generating inputs into communications device 600, and output mechanism 644 for generating information for consumption by the user of the communications device 600. For example, input mechanism 642 may include a mechanism such as a key or keyboard, a mouse, a touch-screen display, a microphone, etc. Further, for example, output mechanism 644 may include a display, an audio speaker, a haptic feedback mechanism, a Personal Area Network (PAN) transceiver etc. In the illustrated aspects, the output mechanism 644 may include a display operable to present media content that is in image or video format or an audio speaker to present media content that is in an audio format.

**FIG. 7** depicts another depicts a block diagram of an exemplary communication system 700 configured to improve NFC-A device collision resolution in an environment with different NFCID sizes, according to an aspect. For example, system 700 can reside at least partially within a communications device (e.g., communications device 600). It is to be appreciated that system 700 is represented as including functional blocks, which can be functional blocks that represent functions implemented by a processor, software, or combination thereof (e.g., firmware). System 700 includes a logical grouping 702 of electrical components that can act in conjunction.

For instance, in an aspect, logical grouping 702 can include an electrical component that may provide means for receiving 704 one or more NFC based messages including one or more NFCIDs with byte lengths corresponding to one or more cascade level values. For example, in an aspect, the means for receiving 704 can include receiver 602, DH 634, NFCC 630, NFC collision resolution module 660, and/or processor 606 of communications device 600. In an aspect, the means for receiving 704 may be configured to receive a single device detection response message including a first NFCID of the one or more NFCIDs with a byte length that corresponds to the first cascade level value of the one or more cascade level values. In an aspect, the means for receiving 704 may be configured to receive a single device detection response message from a first remote NFC device identified through the second NFCID, and receive a selecting response message from the first remote NFC device indicating that the second NFCID is incomplete. In an aspect, the means for receiving 704 may be configured to receive a single device detection response message from the first NFC device including the second NFCID with a byte length that corresponds to a second cascade level value of the one or more cascade level values, and receive a selecting response message from the first remote NFC device indicating that the second NFCID is complete. In an aspect, the means for receiving 704 may be configured to receive a single device detection response message from the second remote NFC device that indicates no collisions, and receive a selecting response message from the second remote NFC device indicating that a third NFCID of the one or more NFCIDs is complete. In an aspect, the first cascade level value may correspond to a 4 byte NFCID and/or a 7 byte NFCID, and the second cascade level value may correspond a 7 byte NFCID and/or a 10 byte NFCID. In an aspect, the first and second remote NFC devices may be operable to use NFC-A RF technology.

Further, logical grouping 702 can include an electrical component that may provide means for processing 706 the content of one or more NFC based messages to determine NFCIDs for associated with a plurality of remote NFC devices through use one or more cascade level collision values. For example, in an aspect, the means for processing 706 can include DH 634, NFCC 630, memory 608, NFC collision resolution module 660, and/or processor 606 of communications device 600. In an aspect, the means for processing 706 may be configured to determine a collision by receiving two possible values for a colliding bit in a first NFCID that has a byte length corresponding to a first cascade level value, set a cascade level collision value based on the first cascade level value, generate a second NFCID from the first NFCID by selecting one value of the two possible values for the colliding bit, determine that a byte length associated with the second NFCID results in an incomplete NFCID for a first remote NFC device, obtain a further part of the second NFCID that corresponds to the first remote NFC device using a second cascade level value, determine that at least one other remote NFC device is not yet identified based on the set cascade level collision value, and obtain a third NFCID that corresponds to a second remote NFC device. In such an aspect, the second cascade level value may correspond to a longer byte length NFCID than the first cascade level value. In an aspect, the cascade level collision value may include three available values where each of the three available values indicates a collision associated with a different cascade level value. In an aspect, the means for processing 706 may be configured to reset the cascade level collision value to a default setting once all the remote NFC devices have been resolved.

Further, logical grouping 702 can include an electrical component that may provide means for transmitting 708 one or more NFC based messages including one or more NFCIDs and one or more cascade level values. For example, in an aspect, the means for transmitting 708 can include transmitter 620, DH 634, NFCC 630, memory 608, NFC collision resolution module 660, and/or processor 606 of communications device 600. In an aspect, the means for transmitting 708 may be configured to transmit a single device detection request message including a first cascade level value of the one or more cascade level values. In an aspect, the means for transmitting 708 may be configured to transmit a single device detection request message including a first cascade level value of the one or more cascade level values and the second NFCID of the one or more NFCIDs, and transmit a selecting request message to a first remote NFC device including the second NFCID and the first cascade level value. In an aspect, the means for transmitting 708 may be configured to transmit a single device detection request message including a second cascade level value of the one or more cascade level values, and transmit a selecting request message to the first remote NFC device including a second NFCID of the one or more NFCIDs and the second cascade level value. In an aspect, the means for transmitting 708 may be configured to transmit a sleep request message to a first remote NFC device, transmit a single device detection request message including a first cascade level value of the one or more cascade level values, transmit a selecting request message to the second remote NFC device including a third NFCID of the one or more NFCIDs and based on the first cascade level value.

In another aspect, logical grouping 702 can include an electrical component that may provide means for storing 710 one or more NFCIDs associated with a plurality of remote NFC devices obtained using the means for processing 706. For example, in an aspect, the means for storing 710 can include DH 634, NFCC 630, memory 608, NFC collision resolution module 660, and/or processor 606 of communications device 600. In an aspect, the means for storing 710 may be configured to store a second NFCID as an identifier for a first remote NFC device of the plurality of remote NFC devices upon a determination that the second NFCID is complete. In an aspect, the means for storing 710 may be configured to store a third NFCID as an identifier for a second remote NFC device of the plurality of remote NFC devices upon a determination that the third NFCID is complete.

Additionally, system 700 can include a memory 712 that retains instructions for executing functions associated with the electrical components 704, 706, 708, and 710, stores data used or obtained by the electrical components 704, 706, 708, 710, etc. While shown as being external to memory 712, it is to be understood that one or more of the electrical components 704, 706, 708, and 710 may exist within memory 712. In one example, electrical components 704, 706, 708, and 710 can include at least one processor, or each electrical component 704, 706, 708, and 710 can be a corresponding module of at least one processor. Moreover, in an additional or alternative example, electrical components 704, 706, 708, and 710 may be a computer program product including a computer readable medium, where each electrical component 704, 706, 708, and 710 may be corresponding code. In an aspect, for example, memory 712 may be the same as or similar to memory 608 (FIG. 6). In another aspect, memory 712 may be associated with DH 634, NFCC 630, and/or NFC collision resolution module 660.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, mobile equipment (ME), remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 602.11 (Wi-Fi), IEEE 602.16 (WiMAX), IEEE 602.20, Flash-OFDMA, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (e.g., mobile-to-mobile) *ad hoc* network systems often using unpaired unlicensed spectrums, 802.xx wireless LAN, BLUETOOTH, near-field communications (NFC-A, NFC-B, NFC,-f, etc.), and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An example storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or aspects, it should be noted that various changes and modifications could be made herein without departing from the scope of the described aspects and/or aspects as defined by the appended claims. Furthermore, although elements of the described aspects and/or aspects may be described or claimed in the singular, the plural is contemplated unless limitation to the singular is explicitly stated. Additionally, all or a portion of any aspect and/or aspect may be utilized with all or a portion of any other aspect and/or aspect, unless stated otherwise.

In the following, further examples are described to facilitate the understanding of the invention:
1. A method of wireless communications, comprising:
   determining a colliding bit in a first near field communication identifier (NFCID) that has a byte length corresponding to a first cascade level value;
   setting a cascade level collision value based on the first cascade level value;
   generating a second NFCID from the first NFCID by selecting one value of two possible values for the colliding bit;
   determining that a byte length associated with the second NFCID results in an incomplete NFCID for a first remote NFC device;
   obtaining a further part of the second NFCID that corresponds to the first remote NFC device using a second cascade level value, wherein the second cascade level value corresponds to a longer byte length NFCID than the first cascade level value;
   determining that at least one other remote NFC device is not yet identified based on the set cascade level collision value; and
   obtaining a third NFCID that corresponds to a second remote NFC device.
2. The method of example 1, further comprising:
   transmitting a single device detection request message including the first cascade level value;
   receiving a single device detection response message including the first NFCID.
3. The method of example 1, wherein the determining that the byte length associated with the second NFCID results in the incomplete NFCID for the first remote NFC device further comprises:
   transmitting a single device detection request message including the first cascade level value and the second NFCID;
   receiving a single device detection response message from the first remote NFC device identified through the second NFCID;
   transmitting a selecting request message to the first remote NFC device including the second NFCID and the first cascade level value; and
   receiving a selecting response message from the first remote NFC device indicating that the second NFCID that based on the first cascade level value is incomplete.
4. The method of example 1, wherein the obtaining the further part of the second NFCID that corresponds to the first remote NFC device further comprises:
   transmitting a single device detection request message including the second cascade level value;
   receiving a single device detection response message from the first remote NFC device including the second NFCID with a byte length that corresponds to the second cascade level value;
   transmitting a selecting request message to the first remote NFC device including the second NFCID and the second cascade level value;
   receiving a selecting response message from the first remote NFC device indicating that the second NFCID that is based on the second cascade level value is complete; and
   storing the second NFCID as an identifier for the first remote NFC device.
5. The method of example 1, wherein the obtaining the third NFCID that corresponds to the second remote NFC device further comprises:
   transmitting a sleep request message to the first remote NFC device;
   transmitting a single device detection request message including the first cascade level value;
   receiving a single device detection response message from the second remote NFC device that indicates no collisions;
   transmitting a selecting request message to the second remote NFC device including the third NFCID based on the first cascade level value;
   receiving a selecting response message from the second remote NFC device indicating that the third NFCID that based on the first cascade level value is complete; and
   storing the third NFCID as an identifier for the second remote NFC device.
6. The method of example 1, further comprising:
   resetting the cascade level collision value to a default setting.
7. The method of example 1, wherein the first cascade level value corresponds to at least one of a 4 byte NFCID and a 7 byte NFCID.
8. The method of example 1, wherein the second cascade level value corresponds to at least one of a 7 byte NFCID and a 10 byte NFCID.
9. The method of example 1, wherein the cascade level collision value includes three available values where each of the three available values indicates a collision associated with a different cascade level value.
10. The method of example 1, wherein the first and second remote NFC devices are operable to use NFC-A radio frequency (RF) technology.
11. A computer program product, comprising:
   a computer-readable medium comprising code for:
      determining a colliding bit in a first near field communication identifier (NFCID) that has a byte length corresponding to a first cascade level value;
      setting a cascade level collision value based on the first cascade level value;
      generating a second NFCID from the first NFCID by selecting one value of two possible values for the colliding bit;
      determining that a byte length associated with the second NFCID results in an incomplete NFCID for a first remote NFC device;
      obtaining a further part of the second NFCID that corresponds to the first remote NFC device using a second cascade level value, wherein the second cascade level value corresponds to a longer byte length NFCID than the first cascade level value;
      determining that at least one other remote NFC device is not yet identified based on the set cascade level collision value; and
      obtaining a third NFCID that corresponds to a second remote NFC device.
12. The computer program product of example 11, wherein the computer readable medium further comprises code for:
   transmitting a single device detection request message including the first cascade level value;
   receiving a single device detection response message including the first NFCID.
13. The computer program product of example 11, wherein the code for determining that the byte length associated with the second NFCID results in the incomplete NFCID for the first remote NFC device further comprises code for:
   transmitting a single device detection request message including the first cascade level value and the second NFCID;
   receiving a single device detection response message from the first remote NFC device identified through the second NFCID;
   transmitting a selecting request message to the first remote NFC device including the second NFCID and the first cascade level value; and
   receiving a selecting response message from the first remote NFC device indicating that the second NFCID that based on the first cascade level value is incomplete.
14. The computer program product of example 11, wherein the code for obtaining the further part of the second NFCID that corresponds to the first remote NFC device further comprises code for:
   transmitting a single device detection request message including the second cascade level value;
   receiving a single device detection response message from the first remote NFC device including the second NFCID with a byte length that corresponds to the second cascade level value;
   transmitting a selecting request message to the first remote NFC device including the second NFCID and the second cascade level value;
   receiving a selecting response message from the first remote NFC device indicating that the second NFCID that is based on the second cascade level value is complete; and
   storing the second NFCID as an identifier for the first remote NFC device.
15. The computer program product of example 11, wherein the code for obtaining the third NFCID that corresponds to the second remote NFC device further comprises code for:
   transmitting a sleep request message to the first remote NFC device;
   transmitting a single device detection request message including the first cascade level value;
   receiving a single device detection response message from the second remote NFC device that indicates no collisions;
   transmitting a selecting request message to the second remote NFC device including the third NFCID based on the first cascade level value;
   receiving a selecting response message from the second remote NFC device indicating that the third NFCID that based on the first cascade level value is complete; and
   storing the third NFCID as an identifier for the second remote NFC device.
16. The computer program product of example 11, wherein the computer readable medium further comprises code for:
   resetting the cascade level collision value to a default setting.
17. The computer program product of example 11, wherein the first cascade level value corresponds to at least one of a 4 byte NFCID and a 7 byte NFCID.
18. The computer program product of example 11, wherein the second cascade level value corresponds to at least one of a 7 byte NFCID and a 10 byte NFCID.
19. The computer program product of example 11, wherein the cascade level collision value includes three available values where each of the three available values indicates a collision associated with a different cascade level value.
20. The computer program product of example 11, wherein the first and second remote NFC devices are operable to use NFC-A radio frequency (RF) technology.
21. An apparatus for communications, comprising:
   means for receiving one or more NFC based messages including one or more near field communication identifier (NFCID)s and based on one or more cascade level values; and
   means for processing the received one or more NFC based messages, wherein the means for processing are configured to:
      determine a colliding bit in a first NFCID of the one or more NFCIDs based on a first cascade level value of the one or more cascade level values;
      set a cascade level collision value based on the first cascade level value;
      generate a second NFCID from the first NFCID by selecting one value of two possible values for the colliding bit;
      determine that a byte length associated with the second NFCID results in an incomplete NFCID for a first remote NFC device;
      obtain a further part of the second NFCID that corresponds to the first remote NFC device using a second cascade level value, wherein the second cascade level value corresponds to a longer byte length NFCID than the first cascade level value;
      determine that at least one other remote NFC device is not yet identified based on the set cascade level collision value; and
      obtain a third NFCID that corresponds to a second remote NFC device.
22. The apparatus of example 21, further comprising means for transmitting a single device detection request message including the first cascade level value; and wherein the means for receiving are further configured to:
   receive a single device detection response message including the first NFCID.
23. The apparatus of example 21, further comprising means for transmitting a single device detection request message including the first cascade level value and the second NFCID, and wherein the means for receiving and the means for transmitting are further configured to:
   receive a single device detection response message from the first remote NFC device identified through the second NFCID;
   transmit a selecting request message to the first remote NFC device including the second NFCID and the first cascade level value; and
   transmit a selecting response message from the first remote NFC device indicating that the second NFCID that based on the first cascade level value is incomplete.
24. The apparatus of example 21, further comprising means for transmitting a single device detection request message including the second cascade level value, and wherein the means for transmitting and means for receiving are further configured to:
   receive a single device detection response message from the first remote NFC device including the second NFCID with a byte length that corresponds to the second cascade level value;
   transmit a selecting request message to the first remote NFC device including the second NFCID and the second cascade level value; and
   receive a selecting response message from the first remote NFC device indicating that the second NFCID that is based on the second cascade level value is complete; and
   further comprising means for storing the second NFCID as an identifier for the first remote NFC device.
25. The apparatus of example 21, further comprising means for transmitting a sleep request message to the first remote NFC device, and wherein the means for transmitting and means for receiving are further configured to:
   transmit a single device detection request message including the first cascade level value;
   receive a single device detection response message from the second remote NFC device that indicates no collisions;
   transmit a selecting request message to the second remote NFC device including the third NFCID based on the first cascade level value; and
   receive a selecting response message from the second remote NFC device indicating that the third NFCID that based on the first cascade level value is complete; and
   further comprising means for storing the third NFCID as an identifier for the second remote NFC device.
26. The apparatus of example 21, wherein the means for processing are further configured to reset the cascade level collision value to a default setting.
27. The apparatus of example 21, wherein the first cascade level value corresponds to at least one of a 4 byte NFCID and a 7 byte NFCID.
28. The apparatus of example 21, wherein the second cascade level value corresponds to at least one of a 7 byte NFCID and a 10 byte NFCID.
29. The apparatus of example 21, wherein the cascade level collision value includes three available values where each of the three available values indicates a collision associated with a different cascade level value.
30. The apparatus of example 21, wherein the first and second remote NFC devices are operable to use NFC-A radio frequency (RF) technology.
31. An apparatus for NFC communications, comprising:
   a transceiver;
   a memory;
   a processor coupled to the memory; and
   a NFC collision resolution module coupled to at least one of the memory or the processor and configured to:
      determine a colliding bit in a first near field communication identifier (NFCID) that has a byte length corresponding to a first cascade level value;
      set a cascade level collision value based on the first cascade level value;
      generate a second NFCID from the first NFCID by selecting one value of two possible values for the colliding bit;
      determine that a byte length associated with the second NFCID results in an incomplete NFCID for a first remote NFC device;
      obtain a further part of the second NFCID that corresponds to the first remote NFC device using a second cascade level value, wherein the second cascade level value corresponds to a longer byte length NFCID than the first cascade level value;
      determine that at least one other remote NFC device is not yet identified based on the set cascade level collision value; and
      obtain a third NFCID that corresponds to a second remote NFC device.
32. The apparatus of example 31, wherein the transceiver is further configured to:
   transmit a single device detection request message including the first cascade level value;
   receive a single device detection response message including the first NFCID.
33. The apparatus of example 31, wherein the transceiver is further configured to:
   transmit a single device detection request message including the first cascade level value and the second NFCID;
   receive a single device detection response message from the first remote NFC device identified through the second NFCID;
   transmit a selecting request message to the first remote NFC device including the second NFCID and the first cascade level value; and
   receive a selecting response message from the first remote NFC device indicating that the second NFCID that based on the first cascade level value is incomplete.
34. The apparatus of example 31, wherein the transceiver is further configured to:
   transmit a single device detection request message including the second cascade level value;
   receive a single device detection response message from the first remote NFC device including the second NFCID with a byte length that corresponds to the second cascade level value;
   transmit a selecting request message to the first remote NFC device including the second NFCID and the second cascade level value; and
   receive a selecting response message from the first remote NFC device indicating that the second NFCID that is based on the second cascade level value is complete; and
   wherein the memory is further configured to store the second NFCID as an identifier for the first remote NFC device.
35. The apparatus of example 31, wherein the transceiver is further configured to:
   transmit a sleep request message to the first remote NFC device;
   transmit a single device detection request message including the first cascade level value;
   receive a single device detection response message from the second remote NFC device that indicates no collisions;
   transmit a selecting request message to the second remote NFC device including the third NFCID based on the first cascade level value; and
   receive a selecting response message from the second remote NFC device indicating that the third NFCID that based on the first cascade level value is complete; and
   wherein the memory is further configured to store the third NFCID as an identifier for the second remote NFC device.
36. The apparatus of example 31, wherein the NFC collision resolution module is further configured to:
   reset the cascade level collision value to a default setting.
37. The apparatus of example 31, wherein the first cascade level value corresponds to at least one of a 4 byte NFCID and a 7 byte NFCID.
38. The apparatus of example 31, wherein the second cascade level value corresponds to at least one of a 7 byte NFCID and a 10 byte NFCID.
39. The apparatus of example 31, wherein the cascade level collision value includes three available values where each of the three available values indicates a collision associated with a different cascade level value.
40. The apparatus of example 31, wherein the first and second remote NFC devices are operable to use NFC-A radio frequency (RF) technology.

## Claims

1. A method of wireless communications, comprising:
determining (406) a colliding bit in a first near field communication identifier, NFCID, that has a byte length corresponding to a first cascade level value;
setting (408) a cascade level collision value based on the first cascade level value;
generating (410) a second NFCID from the first NFCID by selecting one value of two possible values for the colliding bit;
determining (412) that a byte length associated with the second NFCID results in an incomplete NFCID for a first remote NFC device;
obtaining (414) a further part of the second NFCID that corresponds to the first remote NFC device using a second cascade level value, wherein the second cascade level value corresponds to a longer byte length NFCID than the first cascade level value;
determining (416) that at least one other remote NFC device is not yet identified based on the set cascade level collision value; and
obtaining (418) a third NFCID that corresponds to a second remote NFC device.

2. The method of claim 1, further comprising:
transmitting (402) a single device detection request message including the first cascade level value;
receiving (404) a single device detection response message including the first NFCID.

3. The method of claim 1, wherein the determining that the byte length associated with the second NFCID results in the incomplete NFCID for the first remote NFC device further comprises:
transmitting a single device detection request message including the first cascade level value and the second NFCID;
receiving a single device detection response message from the first remote NFC device identified through the second NFCID;
transmitting a selecting request message to the first remote NFC device including the second NFCID and the first cascade level value; and
receiving a selecting response message from the first remote NFC device indicating that the second NFCID that based on the first cascade level value is incomplete.

4. The method of claim 1, wherein the obtaining the further part of the second NFCID that corresponds to the first remote NFC device further comprises:
transmitting a single device detection request message including the second cascade level value;
receiving a single device detection response message from the first remote NFC device including the second NFCID with a byte length that corresponds to the second cascade level value;
transmitting a selecting request message to the first remote NFC device including the second NFCID and the second cascade level value;
receiving a selecting response message from the first remote NFC device indicating that the second NFCID that is based on the second cascade level value is complete; and
storing the second NFCID as an identifier for the first remote NFC device.

5. The method of claim 1, wherein the obtaining the third NFCID that corresponds to the second remote NFC device further comprises:
transmitting a sleep request message to the first remote NFC device;
transmitting a single device detection request message including the first cascade level value;
receiving a single device detection response message from the second remote NFC device that indicates no collisions;
transmitting a selecting request message to the second remote NFC device including the third NFCID based on the first cascade level value;
receiving a selecting response message from the second remote NFC device indicating that the third NFCID that based on the first cascade level value is complete; and
storing the third NFCID as an identifier for the second remote NFC device.

6. The method of claim 1, further comprising:
resetting the cascade level collision value to a default setting.

7. The method of claim 1, wherein the first cascade level value corresponds to at least one of a 4 byte NFCID and a 7 byte NFCID.

8. A computer-program comprising instructions for performing a method according to any of the claims 1 to 7.

9. An apparatus for communications, comprising:
means for receiving (704) one or more NFC based messages including one or more near field communication identifiers, NFCIDs, and based on one or more cascade level values; and
means for processing (706) the received one or more NFC based messages, wherein the means for processing are configured to:
determine a colliding bit in a first NFCID of the one or more NFCIDs based on a first cascade level value of the one or more cascade level values;
set a cascade level collision value based on the first cascade level value;
generate a second NFCID from the first NFCID by selecting one value of two possible values for the colliding bit;
determine that a byte length associated with the second NFCID results in an incomplete NFCID for a first remote NFC device;
obtain a further part of the second NFCID that corresponds to the first remote NFC device using a second cascade level value, wherein the second cascade level value corresponds to a longer byte length NFCID than the first cascade level value;
determine that at least one other remote NFC device is not yet identified based on the set cascade level collision value; and
obtain a third NFCID that corresponds to a second remote NFC device.

10. The apparatus of claim 9, further comprising means for transmitting (708) a single device detection request message including the first cascade level value; and wherein the means for receiving are further configured to:
receive a single device detection response message including the first NFCID.

11. The apparatus of claim 9, further comprising means for transmitting a single device detection request message including the first cascade level value and the second NFCID, and wherein the means for receiving (704) and the means for transmitting (708) are further configured to:
receive a single device detection response message from the first remote NFC device identified through the second NFCID;
transmit a selecting request message to the first remote NFC device including the second NFCID and the first cascade level value; and
transmit a selecting response message from the first remote NFC device indicating that the second NFCID that based on the first cascade level value is incomplete.

12. The apparatus of claim 9, further comprising means for transmitting a single device detection request message including the second cascade level value, and wherein the means for transmitting (708) and means for receiving (704) are further configured to:
receive a single device detection response message from the first remote NFC device including the second NFCID with a byte length that corresponds to the second cascade level value;
transmit a selecting request message to the first remote NFC device including the second NFCID and the second cascade level value; and
receive a selecting response message from the first remote NFC device indicating that the second NFCID that is based on the second cascade level value is complete; and
further comprising means for storing (710) the second NFCID as an identifier for the first remote NFC device.

13. The apparatus of claim 9, further comprising means for transmitting a sleep request message to the first remote NFC device, and wherein the means for transmitting (708) and means for receiving (704) are further configured to:
transmit a single device detection request message including the first cascade level value;
receive a single device detection response message from the second remote NFC device that indicates no collisions;
transmit a selecting request message to the second remote NFC device including the third NFCID based on the first cascade level value; and
receive a selecting response message from the second remote NFC device indicating that the third NFCID that based on the first cascade level value is complete; and
further comprising means for storing the third NFCID as an identifier for the second remote NFC device.

14. The apparatus of claim 9, wherein the means for processing (706) are further configured to reset the cascade level collision value to a default setting.

15. The apparatus of claim 9, wherein the first cascade level value corresponds to at least one of a 4 byte NFCID and a 7 byte NFCID.

## Patentansprüche

1. Verfahren zur drahtlosen Kommunikation, aufweisend:
Bestimmen (406) eines Kollisionsbits in einem ersten Nahfeldkommunikations-Identifizierungszeichen, NFCID, welches eine Byte-Länge hat, welche einem ersten Kaskadenstufen-Wert entspricht;
Einstellen (408) eines Kaskadenstufen-Kollisionswerts basierend auf dem ersten Kaskadenstufen-Wert;
Erzeugen (410) eines zweiten NFCID von dem ersten NFCID durch Auswählen eines Wertes aus zwei möglichen Werten für das Kollisionsbit;
Bestimmen (412), dass eine Byte-Länge, welche mit dem zweiten NFCID assoziiert ist, in eine unvollständige NFCID resultiert für eine erste Remote-NFC-Vorrichtung;
Erhalten (414) eines weiteren Teils der zweiten NFCID, welche der ersten Remote-NFC-Vorrichtung entspricht, unter Verwendung eines zweiten Kaskadenstufen-Werts, wobei der zweite Kaskadenstufen-Wert einem längeren Byte-Längen NFCID als der erste Kaskadenstufen-Wert entspricht;
Bestimmen (416), dass mindestens eine andere Remote-NFC-Vorrichtung noch nicht identifiziert wurde basierend auf dem eingestellten Kaskadenstufen-Kollisionswert; und
Erhalten (418) einer dritten NFCID, welche einer zweiten Remote-NFC-Vorrichtung entspricht.

2. Vorrichtung nach Anspruch 1, weiterhin aufweisend:
Übertragen (402) einer einzigen Vorrichtungserkennungs-Anfragenachricht, welche den ersten Kaskadenstufen-Wert beinhaltet;
Empfangen (404) einer einzigen Vorrichtungserkennungs-Antwortnachricht, welche die erste NFCID beinhaltet.

3. Verfahren nach Anspruch 1, wobei das Bestimmen, dass die Byte-Länge, welche mit der zweiten NFCID assoziiert ist, in eine unvollständige NFCID resultiert für die erste Remote-NFC-Vorrichtung weiterhin aufweist:
Übertragen einer einzigen Vorrichtungserkennungs-Anfragenachricht, welche den ersten Kaskadenstufen-Wert und die zweite NFCID beinhaltet;
Empfangen einer einzigen Vorrichtungserkennungs-Antwortnachricht von der ersten Remote-NFC-Vorrichtung, welche durch die zweite NFCID identifiziert wird;
Übertragen einer Auswahl-Anfragenachricht an die erste Remote-NFC-Vorrichtung, welche die zweite NFCID und den ersten Kaskadenstufen-Wert beinhaltet; und
Empfangen einer Auswahlnachricht von der ersten Remote-NFC-Vorrichtung, welche angibt, dass die zweite NFCID, welche auf dem zweiten Kaskadenstufen-Wert basiert, unvollständig ist.

4. Verfahren nach Anspruch 1, wobei das Erhalten des weiteren Teils der zweiten NFCID, welche der ersten Remote-NFC-Vorrichtung entspricht, weiterhin aufweist:
Übertragen einer einzigen Vorrichtungserkennungs-Anfragenachricht, welche den zweiten Kaskadenstufen-Wert beinhaltet;
Empfangen einer einzigen Vorrichtungserkennungs-Antwortnachricht von der ersten Remote-NFC-Vorrichtung, welche die zweite NFCID mit einer Byte-Länge beinhaltet, welche dem zweiten Kaskadenstufen-Wert entspricht;
Übertragen einer Auswahl-Anfragenachricht an die erste Remote-NFC-Vorrichtung, welche die zweite NFCID und den zweiten Kaskadenstufen-Wert beinhaltet;
Empfangen einer Auswahl-Antwortnachricht von der ersten Remote-NFC-Vorrichtung, welche angibt, dass die zweite NFCID, welche auf dem zweiten Kaskadenstufen-Wert basiert, vollständig ist; und
Speichern der zweiten NFCID als ein Identifizierungszeichen für die erste Remote-NFC-Vorrichtung.

5. Vorrichtung nach Anspruch 1, wobei das Erhalten der dritten NFCID, welche der zweiten Remote-NFC-Vorrichtung entspricht, weiterhin aufweist:
Übertragen einer Schlaf-Anfragenachricht an die erste Remote-NFC-Vorrichtung;
Übertragen einer einzigen Vorrichtungserkennungs-Anfragenachricht, welche den erste Kaskadenstufen-Wert beinhaltet;
Empfangen einer einzigen Vorrichtungserkennungs-Antwortnachricht von der zweiten Remote-NFC-Vorrichtung, welche keine Kollisionen angibt;
Übertragen einer Auswahl-Anfragenachricht an die zweite Remote-NFC-Vorrichtung, welche die dritte NFCID beinhaltet basierend auf dem ersten Kaskadenstufen-Wert;
Empfangen einer Auswahl-Antwortnachricht von der zweiten Remote-NFC-Vorrichtung, welche angibt, dass die dritte NFCID, welche auf dem ersten Kaskadenstufenwert basiert, vollständig ist; und
Speichern der dritten NFCID als ein Identifizierungszeichen für die zweite Remote-NFC-Vorrichtung.

6. Verfahren nach Anspruch 1, weiterhin aufweisend:
Zurücksetzen des Kaskadenstufen-Kollisionswerts auf eine Default-Einstellung.

7. Verfahren nach Anspruch 1, wobei der erste Kaskadenstufen-Wert zumindest einem von einer 4 Byte NFCID und einer 7 Byte NFCID entspricht.

8. Computerprogramm, aufweisend Anweisungen zum Durchführen eines Verfahrens nach einem der Ansprüche 1 bis 7.

9. Vorrichtung zur Kommunikation, aufweisend:
Mittel zum Empfangen (704) einer oder mehrerer NFC-basierten Nachrichten, welche eine oder mehrere Nachfeldkommunikations-Identifizierungszeichen, NFCIDs, beinhaltet und auf einem oder mehreren Kaskadenstufen-Werten basiert; und
Mittel zum Verarbeiten (706) der empfangenen einen oder mehreren NFC-basierten Nachrichten, wobei die Mittel zum Verarbeiten, eingerichtet sind, um: ein Kollisionsbit in einer ersten NFCID der einen oder mehreren NFCIDs zu bestimmen basierend auf einem ersten Kaskadenstufen-Wert des einen oder der mehreren Kaskadenstufen-Werte;
einen Kaskadenstufen-Kollisionswert einzustellen basierend auf dem ersten Kaskadenstufen-Wert;
eine zweite NFCID von der ersten NFCID zu erzeugen durch Auswählen eines Wertes aus zwei möglichen Werten für das Kollisionsbit;
zu bestimmen, dass eine Byte-Länge, welche mit der zweiten NFCID assoziiert ist, in eine unvollständige NFCID resultiert für eine erste Remote-NFC-Vorrichtung;
einen weiteren Teil der zweiten NFCID zu erhalten, welche der ersten Remote-NFC-Vorrichtung entspricht, unter Verwendung eines zweiten Kaskadenstufen-Werts, wobei der zweite Kaskadenstufen-Wert einer längeren Byte-Länge NFCID entspricht als der erste Kaskadenstufen-Wert;
zu bestimmen, dass mindestens eine andere Remote-NFC-Vorrichtung noch nicht identifiziert wurde basierend auf dem eingestellten Kaskadenstufen-Kollisionswert; und
eine dritte NFCID zu erhalten, welche einer zweiten Remote-NFC-Vorrichtung entspricht.

10. Vorrichtung nach Anspruch 9, weiterhin aufweisend Mittel zum Übertragen (708) einer einzigen Vorrichtungserkennungs-Anfragenachricht, welche den ersten Kaskadenstufen-Wert beinhaltet; und wobei die Mittel zum Empfangen weiterhin eingerichtet sind, um: eine einzige Vorrichtungserkennungs-Antwortnachricht zu empfangen, welche die erste NFCID beinhaltet.

11. Vorrichtung nach Anspruch 9, weiterhin aufweisend Mittel zum Übertragen einer einzigen Vorrichtungserkennungs-Anfragenachricht, welche den ersten Kaskadenstufen-Wert und die zweite NFCID beinhaltet, und wobei die Mittel zum Empfangen (704) und die Mittel zum Übertragen (708) weiterhin eingerichtet sind, um:
eine einzige Vorrichtungserkennungs-Antwortnachricht von der ersten Remote-NFC-Vorrichtung zum empfangen, welche durch die zweite NFCID identifiziert wird;
eine Auswahl-Anfragenachricht an die erste Remote-NFC-Vorrichtung zu übertragen, welche die zweite NFCID und den ersten Kaskadenstufen-Wert beinhaltet; und
eine Auswahl-Antwortnachricht von der ersten Remote-NFC-Vorrichtung zu übertragen, welche angibt, dass die zweite NFCID, welche auf dem zweiten Kaskadenstufen-Wert basiert, unvollständig ist.

12. Vorrichtung nach Anspruch 9, weiterhin aufweisend Mittel zum Übertragen einer einzigen Vorrichtungserkennungs-Anfragenachricht, welche den zweiten Kaskadenstufen-Wert beinhaltet und wobei die Mittel zum Übertragen (708) und Mittel zum Empfangen (704) weiterhin eingerichtet sind, um:
eine einzige Vorrichtungserkennungs-Antwortnachricht von der ersten Remote-NFC-Vorrichtung zu empfangen, welche die zweite NFCID mit einer Byte-Länge beinhaltet, welche dem zweiten Kaskadenstufen-Wert entspricht;
eine Auswahl-Anfragenachricht an die erste Remote-NFC-Vorrichtung zu übertragen, welche die zweite NFCID und den zweiten Kaskadenstufen-Wert beinhaltet; und
eine Auswahl-Antwortnachricht von der ersten Remote-NFC-Vorrichtung zu empfangen, welche angibt, dass die zweite NFCID, welche auf dem zweiten Kaskadenstufenwert basiert, vollständig ist; und
weiterhin aufweisend Mittel zum Speichern (710) der zweiten NFCID als ein Identifizierungszeichen für die erste Remote-NFC-Vorrichtung.

13. Vorrichtung nach Anspruch 9, weiterhin aufweisend Mittel zum Übertragen einer Schlaf-Anfragenachricht an die erste Remote-NFC-Vorrichtung und wobei die Mittel zum Übertragen (708) und Mittel zum Empfangen (704) weiterhin eingerichtet sind, um:
eine einzige Vorrichtungserkennungs-Anfragenachricht zu übertragen, welche den ersten Kaskadenstufen-Wert beinhaltet;
eine einzige Vorrichtungserkennungs-Antwortnachricht von der zweiten Remote-NFC-Vorrichtung zu empfangen, welche keine Kollisionen angibt;
eine Auswahl-Anfragenachricht an die zweite Remote-NFC-Vorrichtung zu übertragen, welche die dritte NFCID beinhaltet basierend auf dem zweiten Kaskadenstufenwert; und
eine Auswahl-Antwortnachricht von der zweiten Remote-NFC-Vorrichtung zu empfangen, welche angibt, dass die dritte NFCID, welche auf dem ersten Kaskadenstufenwert basiert, vollständig ist; und
weiterhin aufweisend Mittel zum Speichern der dritten NFCID als ein Identifizierungszeichen für die zweite Remote-NFC-Vorrichtung.

14. Vorrichtung nach Anspruch 9, wobei die Mittel zum Verarbeiten (706) weiterhin eingerichtet sind, um den Kaskadenstufen-Kollisionswert auf eine Default-Einstellung zurückzusetzen.

15. Vorrichtung nach Anspruch 9, wobei der erste Kaskadenstufen-Wert zumindest eines von einer 4 Byte NFCID und einer 7 Byte NFCID entspricht.

## Revendications

1. Un procédé de communication sans fil, comprenant :
la détermination (406) d'un bit en collision dans un premier identifiant de communication en champ proche, NFCID, qui possède une longueur en octets correspondant à un première valeur de niveau de cascade ;
l'ajustement (408) d'une valeur de niveau de cascade de collision sur la base de la première valeur de niveau de cascade ;
la génération (410) d'un second NFCID à partir du premier NFCID par sélection d'une valeur parmi deux valeurs possibles pour le bit en collision ;
la détermination (412) qu'une longueur en octets associée au second NFCID donne un NFCID incomplet pour un premier dispositif NFC distant,
l'obtention (414) d'une autre partie du second NFCID qui correspond au premier dispositif NFC distant en utilisant une seconde valeur de niveau de cascade, la seconde valeur de niveau de cascade correspondant à un NFCID de longueur en octets plus longue que la première valeur de niveau de cascade ;
la détermination (416) qu'au moins un autre dispositif NFC distant n'est pas encore identifié sur la base de la valeur ajustée de niveau de cascade de collision ; et
l'obtention (418) d'un troisième NFCID qui correspond à un second dispositif NFC distant.

2. Le procédé de la revendication 1, comprenant en outre :
l'émission (402) d'un unique message de requête de détection de dispositif comprenant la première valeur de niveau de cascade ;
la réception (404) d'un unique message de réponse de détection de dispositif comprenant le premier NFCID.

3. Le procédé de la revendication 1, dans lequel la détermination que la longueur en octets associée au second NFCID donne le NFCID incomplet pour le premier dispositif NFC distant comprend en outre :
l'émission d'un unique message de requête de détection de dispositif comprenant la première valeur de niveau de cascade et le second NFCID ;
la réception d'un unique message de réponse de détection de dispositif en provenance du premier dispositif NFC distant identifié via le second NFCID ;
l'émission d'un message de requête de sélection vers le premier dispositif NFC distant comprenant le second NFCID et la première valeur de niveau de cascade ; et
la réception d'un message de réponse de sélection en provenance du premier dispositif NFC distant indiquant que le second NFCID qui s'est basé sur la première valeur du niveau de cascade est incomplet.

4. Le procédé de la revendication 1, dans lequel l'obtention de l'autre partie du second NFCID correspond au premier dispositif NFC distant comprend en outre :
l'émission d'un unique message de requête de détection de dispositif comprenant la seconde valeur de niveau de cascade ;
la réception d'un unique message de réponse de détection de dispositif en provenance du premier dispositif NFC distant comprenant le second NFCID avec une longueur en octets qui correspond à la seconde valeur de niveau de cascade ;
l'émission d'un message de requête de sélection vers le premier dispositif NFC comprenant le second NFCID et la seconde valeur de niveau de cascade ;
la réception d'un message de réponse de sélection en provenance du premier dispositif NFC distant indiquant que le second NFCID qui est basé sur la seconde valeur de niveau de cascade est incomplet ; et
la mémorisation du second NFCID en tant qu'identifiant pour le premier dispositif NFC distant.

5. Le procédé de la revendication 1, dans lequel l'obtention du troisième NFCID qui correspond au second dispositif NFC distant comprend en outre :
l'émission d'un message de requête de mise en sommeil vers le premier dispositif NFC distant ;
l'émission d'un unique message de requête de détection du dispositif comprenant la première valeur de niveau de cascade ;
la réception d'un unique message de réponse de détection du dispositif en provenance du second dispositif NFC distant qui indique l'absence de collision ;
l'émission d'un message de requête de sélection vers le second dispositif NFC distant comprenant le troisième NFCID sur la base de la première valeur de niveau de cascade ;
la réception d'un message de réponse de sélection en provenance du second dispositif NFC distant indiquant que le troisième NFCID qui se basait sur la première valeur de niveau de cascade est complet ; et
la mémorisation du troisième NFCID en tant qu'identifiant pour le second dispositif NFC distant.

6. Le procédé de la revendication 1, comprenant en outre :
la remise de la valeur de collision du niveau de cascade à un réglage par défaut.

7. Le procédé de la revendication 1, dans lequel la première valeur de niveau de cascade correspond à au moins l'un d'entre un NFCID sur 4 octets et un NFCID sur 7 octets.

8. Un programme information comprenant des instructions pour mettre en oeuvre un procédé selon l'une des revendications 1 à 7.

9. Un équipement de communication, comprenant :
des moyens de réception (704) d'un ou plusieurs messages basés sur NFC comprenant un ou plusieurs identifiants de communication en champ proche, NFCID, et basés sur une ou plusieurs valeurs de niveau de cascade ; et
des moyens de traitement (706) des un ou plusieurs messages basés sur NFC, les moyens de traitement étant configurés pour :
déterminer un bit en collision dans un premier NFCID des un ou plusieurs NFCID basés sur une première valeur de niveau de cascade des une ou plusieurs valeurs de niveau de cascade ;
ajuster une valeur de niveau de cascade de collision sur la base de la première valeur de niveau de cascade ;
générer un second NFCID à partir du premier NFCID par sélection d'une valeur parmi deux valeurs possibles pour le bit en collision ;
déterminer qu'une longueur en octets associée au second NFCID donne un NFCID incomplet pour un premier dispositif NFC distant,
obtenir une autre partie du second NFCID qui correspond au premier dispositif NFC distant en utilisant une seconde valeur de niveau de cascade, la seconde valeur de niveau de cascade correspondant à un NFCID de longueur en octets plus longue que la première valeur de niveau de cascade ;
déterminer qu'au moins un autre dispositif NFC distant n'est pas encore identifié sur la base de la valeur ajustée de niveau de cascade de collision ; et
obtenir un troisième NFCID qui correspond à un second dispositif NFC distant.

10. L'équipement de la revendication 9, comprenant en outre des moyens d'émission (708) d'un unique message de requête de détection de dispositif comprenant la première valeur de niveau de cascade, et dans lequel les moyens de réception sont en outre configurés pour :
recevoir un unique message de réponse de détection de dispositif comprenant le premier NFCID.

11. L'équipement de la revendication 9, comprenant en outre des moyens d'émission d'un unique message de requête de détection de dispositif comprenant la première valeur de niveau de cascade et le second NFCID, et dans lequel les moyens de réception (704) et les moyens d'émission (708) sont en outre configurés pour :
recevoir un unique message de réponse de détection de dispositif en provenance du premier dispositif NFC distant identifié via le second NFCID ;
émettre un message de requête de sélection vers le premier dispositif NFC distant comprenant le second NFCID et la première valeur de niveau de cascade ; et
émettre un message de réponse de sélection en provenance du premier dispositif NFC distant indiquant que le second NFCID qui était basé sur la première valeur de niveau de cascade est incomplet.

12. L'équipement de la revendication 9, comprenant en outre des moyens d'émission d'un unique message de requête de détection de dispositif comprenant la seconde valeur de niveau de cascade, et dans lequel les moyens d'émission (708) et les moyens de réception (704) sont en outre configurés pour :
recevoir un unique message de réponse de détection de dispositif en provenance du premier dispositif NFC distant comprenant le second NFCID avec une longueur en octets qui correspond à la seconde valeur de niveau de cascade ;
émettre un message de requête de sélection vers le premier dispositif NFC distant comprenant le second NFCID et la seconde valeur de niveau de cascade ; et
recevoir un message de réception de sélection en provenance du premier dispositif NFC distant indiquant que le second NFCID qui est basé sur la seconde valeur de niveau de cascade est complet ; et
comprenant en outre des moyens de mémorisation (710) du second NFCID en tant qu'identifiant pour le premier dispositif NFC distant.

13. L'équipement de la revendication 9, comprenant en outre des moyens d'émission d'un message de requête de mise en sommeil vers le premier dispositif NFC distant, et dans lequel les moyens d'émission (708) et les moyens de réception (704) sont en outre configurés pour :
émettre un unique message de requête de détection de dispositif comprenant la première valeur de niveau de cascade ;
recevoir un unique message de réponse de détection de dispositif en provenance du second dispositif NFC qui indique l'absence de collision ;
émettre un message de requête de sélection vers le second dispositif NFC distant comprenant le troisième NFCID sur la base de la première valeur de niveau de cascade ; et
recevoir un message de réponse de sélection en provenance du second dispositif NFC distant indiquant que le troisième NFCID qui était basé sur la première valeur de niveau de cascade est complet ; et
comprenant en outre des moyens de mémorisation du troisième NFCID en tant qu'identifiant pour le second dispositif NFC distant.

14. L'équipement de la revendication 3, dans lequel les moyens de traitement (706) sont en outre configurés pour remettre la valeur de collision de niveau de cascade à un réglage par défaut.

15. L'équipement de la revendication 9, dans lequel la première valeur de niveau de cascade correspond à au moins l'un d'entre un NFCID sur 4 octets et un NFCID sur 7 octets.
